# EUROPEAN PATENT APPLICATION

(11) **EP 4 848 022 A1**
(43) Date of publication of application: **02.12.2026**
(21) Application number: 26163509.8
(22) Date of filing: 10.03.2026
(51) Int. Cl.: G05D 1/224, A01B 69/04

(54) **ROUTE CREATION METHOD, ROUTE CREATION PROGRAM, AND ROUTE CREATION SYSTEM**

(30) Priority: 29.05.2025 JP 2025089634
(71) Applicant: Yanmar Holdings Co., Ltd., Osaka (JP)
(72) Inventor: NISHII, Yasuto, Okayama (JP); TAKAHASHI, Mamoru, Okayama (JP)
(74) Representative: Isarpatent

(57) **Abstract**

[Problem] To provide a route creation method, a route creation program, and a route creation system capable of improving work efficiency of work to create a travel route along which to cause a work vehicle to automatically travel.

[Solution] A reception processing unit 212 receives, from a user, operations of inputting setting information necessary to create a travel route along which to cause a work vehicle 10 to automatically travel in a field. A creation processing unit 214 creates the travel route based on the setting information. A display processing unit 211 displays a reason why the travel route cannot be created on a display screen on which to display the travel route, when the travel route cannot be created in at least one portion between a start position and an end position set in the field.

## Description

### TECHNICAL FIELD

The present invention relates to a technique of creating a travel route along which to cause a work vehicle to automatically travel.

### BACKGROUND ART

A technique of creating a travel route (target route) along which to cause a work vehicle to automatically travel, based on setting information input by a user, has conventionally been known. A technique of stopping creation of a travel route when input setting information is inappropriate has been known (see, for example, Patent Document 1).

### PRIOR ART DOCUMENT

### PATENT DOCUMENT

Patent Document 1: JP-B2-6253678

### SUMMARY OF INVENTION

### TECHNICAL PROBLEM

In the conventional technique, when the creation of a travel route has been stopped, it is difficult for the user to grasp the reason why the travel route has not been able to be created. This makes it difficult for the user to quickly input appropriate setting information when re-inputting the setting information, resulting in a problem of reduced work efficiency of work to create the travel route.

It is an object of the present invention to provide a route creation method, a route creation program, and a route creation system capable of improving work efficiency of work to create a travel route along which to cause a work vehicle to automatically travel.

### SOLUTION TO PROBLEM

A route creation method according to the present invention is a method including receiving, from a user, operations of inputting setting information necessary to create a travel route along which to cause a work vehicle to automatically travel in a work area, creating the travel route based on the setting information, and displaying a reason why the travel route cannot be created on a display screen on which to display the travel route, when the travel route cannot be created in at least one portion between a start position and an end position set in the work area.

A route creation program according to the present invention is a program for causing one or a plurality of processors to perform receiving, from a user, operations of inputting setting information necessary to create a travel route along which to cause a work vehicle to automatically travel in a work area, creating the travel route based on the setting information, and displaying a reason why the travel route cannot be created on a display screen on which to display the travel route, when the travel route cannot be created in at least one portion between a start position and an end position set in the work area.

A route creation system according to the present invention includes a reception processing unit, a creation processing unit, and a display processing unit. The reception processing unit receives, from a user, operations of inputting setting information necessary to create a travel route along which to cause a work vehicle to automatically travel in a work area. The creation processing unit creates the travel route based on the setting information. The display processing unit displays a reason why the travel route cannot be created on a display screen on which to display the travel route, when the travel route cannot be created in at least one portion between a start position and an end position set in the work area.

### ADVANTAGEOUS EFFECTS OF INVENTION

The present invention can provide a route creation method, a route creation program, and a route creation system capable of improving work efficiency of work to create a travel route along which to cause a work vehicle to automatically travel.

### BRIEF DESCRIPTION OF DRAWINGS

Fig. 1 is a diagram showing a configuration of an automatic travel system according to an embodiment of the present invention;
Fig. 2 is an external diagram showing an example of a work vehicle according to the embodiment of the present invention;
Fig. 3 is a diagram showing an example of a travel route of the work vehicle according to the embodiment of the present invention;
Fig. 4 is a diagram showing an example of a menu screen displayed on an operation terminal according to the embodiment of the present invention;
Fig. 5A is a diagram showing an example of a field selection screen displayed on the operation terminal according to the embodiment of the present invention;
Fig. 5B is a diagram showing an example of a work area selection screen displayed on the operation terminal according to the embodiment of the present invention;
Fig. 5C is a diagram showing an example of a tractor selection screen displayed on the operation terminal according to the embodiment of the present invention;
Fig. 5D is a diagram showing an example of a work machine selection screen displayed on the operation terminal according to the embodiment of the present invention;
Fig. 5E is a diagram showing an example of a headland work setting screen displayed on the operation terminal according to the embodiment of the present invention;
Fig. 5F is a diagram showing an example of a tractor use condition screen displayed on the operation terminal according to the embodiment of the present invention;
Fig. 5G is a diagram showing an example of a turning method setting screen displayed on the operation terminal according to the embodiment of the present invention;
Fig. 5H is a diagram showing an example of a headland setting screen displayed on the operation terminal according to the embodiment of the present invention;
Fig. 5I is a diagram showing an example of a setting confirmation screen displayed on the operation terminal according to the embodiment of the present invention;
Fig. 5J is a diagram showing an example of a route creation result screen displayed on the operation terminal according to the embodiment of the present invention;
Fig. 6 is a diagram showing a field according to a first specific example of the embodiment of the present invention;
Fig. 7A is a diagram showing an example of the route creation result screen displayed on the operation terminal according to the first specific example of the embodiment of the present invention;
Fig. 7B is a diagram showing an example of the route creation result screen displayed on the operation terminal according to the first specific example of the embodiment of the present invention;
Fig. 7C is a diagram showing an example of the route creation result screen displayed on the operation terminal according to the first specific example of the embodiment of the present invention;
Fig. 8A is a diagram showing an example of the route creation result screen displayed on the operation terminal according to the first specific example of the embodiment of the present invention;
Fig. 8B is a diagram showing an example of a headland setting screen displayed on the operation terminal according to the first specific example of the embodiment of the present invention;
Fig. 9A is a diagram showing a field according to a second specific example of the embodiment of the present invention;
Fig. 9B is a diagram showing an example of the route creation result screen displayed on the operation terminal according to the second specific example of the embodiment of the present invention;
Fig. 10A is a diagram showing a field according to a third specific example of the embodiment of the present invention;
Fig. 10B is a diagram showing an example of the route creation result screen displayed on the operation terminal according to the third specific example of the embodiment of the present invention;
Fig. 10C is a diagram showing an example of the route creation result screen displayed on the operation terminal according to the third specific example of the embodiment of the present invention;
Fig. 10D is a diagram showing an example of the route creation result screen displayed on the operation terminal according to the third specific example of the embodiment of the present invention;
Fig. 11A is a diagram showing a field according to a fourth specific example of the embodiment of the present invention;
Fig. 11B is a diagram showing an example of the route creation result screen displayed on the operation terminal according to the fourth specific example of the embodiment of the present invention;
Fig. 12A is a diagram showing a field according to a fifth specific example of the embodiment of the present invention;
Fig. 12B is a diagram showing an example of the route creation result screen displayed on the operation terminal according to the fifth specific example of the embodiment of the present invention;
Fig. 13A is a diagram showing a field according to a sixth specific example of the embodiment of the present invention;
Fig. 13B is a diagram showing an example of the route creation result screen displayed on the operation terminal according to the sixth specific example of the embodiment of the present invention;
Fig. 14A is a diagram showing a field according to a seventh specific example of the embodiment of the present invention;
Fig. 14B is a diagram showing an example of the route creation result screen displayed on the operation terminal according to the seventh specific example of the embodiment of the present invention;
Fig. 15A is a diagram showing a field according to an eighth specific example of the embodiment of the present invention;
Fig. 15B is a diagram showing an example of the route creation result screen displayed on the operation terminal according to the eighth specific example of the embodiment of the present invention;
Fig. 16A is a diagram showing a field according to a ninth specific example of the embodiment of the present invention;
Fig. 16B is a diagram showing an example of the route creation result screen displayed on the operation terminal according to the ninth specific example of the embodiment of the present invention; and
Fig. 17 is a flowchart showing an example of a procedure of a route creation process performed by the automatic travel system according to the embodiment of the present invention.

### DESCRIPTION OF EMBODIMENTS

The following embodiments are examples embodying the present invention, and are not intended to limit the technical scope of the present invention.

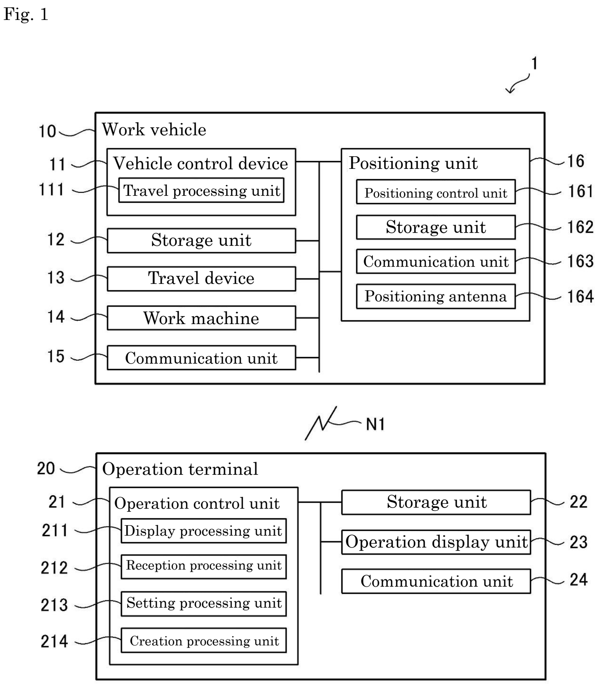

As shown in Fig. 1, an automatic travel system 1 according to an embodiment of the present invention includes a work vehicle 10 and an operation terminal 20. The automatic travel system 1 includes a plurality of the work vehicles 10. Each work vehicle 10 and the operation terminal 20 can communicate via a communication network N1. For example, each work vehicle 10 and the operation terminal 20 can communicate via a cellular network, a packet-switched network, or a wireless LAN.

In the present embodiment, a case where the work vehicle 10 is a tractor will be described as an example. As other embodiments, the work vehicle 10 may be a rice transplanter, a combine, a construction machine, a snowplow, and the like. The automatic travel system 1 may be applied to an air vehicle such as a drone for spraying work, instead of the work vehicle.

The work vehicle 10 has a configuration capable of automatically traveling (automatically steering) along a preset travel route (target route) in a field that is a work area. The work vehicle 10 can perform predetermined work while automatically traveling in the field. For example, the work vehicle 10 performs predetermined work while automatically traveling along a travel route set in advance for the field, based on position information of the current position of the work vehicle 10 calculated by a positioning unit 16.

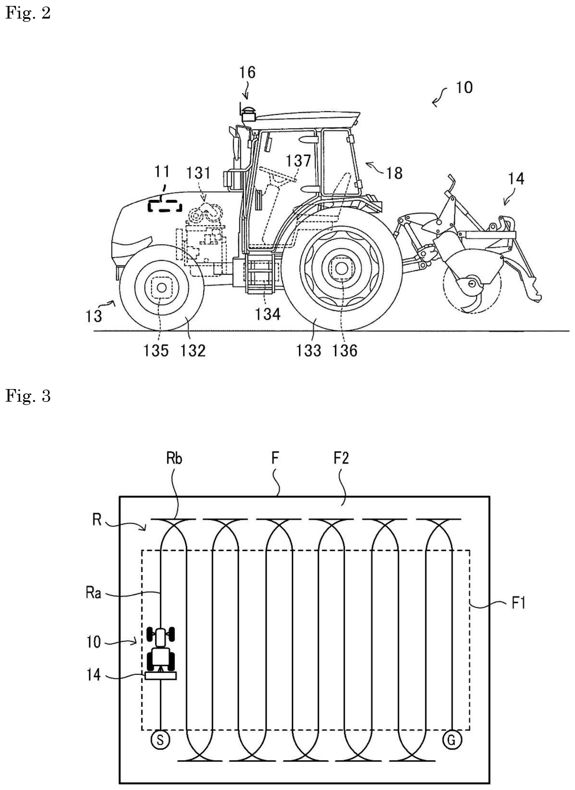

For example, in a field F shown in Fig. 3, the work vehicle 10 performs work while automatically traveling from a start position S to an end position G along a preset travel route R. A work machine 14 (e.g. a cultivator) is attached to the work vehicle 10. The travel route R includes linear work paths Ra (linear paths) arranged in a plurality of rows at equal intervals, and turning paths Rb connecting the work paths Ra. The work vehicle 10 performs tilling work while traveling back and forth along the work paths Ra in a work area F1 (an inner area), and performs turning travel along the turning paths Rb in a headland area F2 (an outer area).

Hereinafter, specific configurations of the work vehicle 10 and the operation terminal 20 will be described. First, a specific configuration of the work vehicle 10 capable of automatic travel will be described.

### [Work vehicle 10]

As shown in Figs. 1 and 2, the work vehicle 10 includes a vehicle control device 11, a storage unit 12, a travel device 13, the work machine 14, a communication unit 15, the positioning unit 16, etc. The vehicle control device 11 is electrically connected to the storage unit 12, the travel device 13, the work machine 14, the positioning unit 16, etc. The vehicle control device 11 and the positioning unit 16 may be capable of wireless communication.

The communication unit 15 is a communication interface through which the work vehicle 10 is connected to the communication network N1 by wire or radio to perform data communication in compliance with a predetermined communication protocol with an external device such as the operation terminal 20 via the communication network N1. The work vehicle 10 can wirelessly communicate with each operation terminal 20 via the communication unit 15.

The storage unit 12 is a non-volatile storage unit such as a hard disk drive (HDD), a solid-state drive (SSD), or a flash memory that stores various types of information. The storage unit 12 stores a control program such as an automatic travel program for causing the vehicle control device 11 to perform an automatic travel process. For example, the automatic travel program is non-transitorily recorded on a computer-readable recording medium such as a flash ROM, an EEPROM, a CD, or a DVD, and is read by a predetermined reading device (not shown) and stored in the storage unit 12. The automatic travel program may be downloaded from a server (not shown) to the work vehicle 10 via the communication network N1 and stored in the storage unit 12. The storage unit 12 may store route data of a travel route created in the operation terminal 20.

The travel device 13 is a drive unit that causes the work vehicle 10 to travel. As shown in Fig. 2, the travel device 13 includes an engine 131 (drive source), front wheels 132, rear wheels 133, a transmission 134, a front axle 135, a rear axle 136, a steering wheel 137, etc. The front wheels 132 and the rear wheels 133 are provided on the left and right of the work vehicle 10. The travel device 13 is not limited to a wheel type including the front wheels 132 and the rear wheels 133, and may be of a crawler type including crawlers provided on the left and right of the work vehicle 10.

The engine 131 is a drive source such as a diesel engine or a gasoline engine driven using fuel supplied to a fuel tank (not shown). The travel device 13 may include an electric motor as a drive source together with the engine 131 or instead of the engine 131. A generator (not shown) is connected to the engine 131, and electric power is supplied from the generator to electric components such as the vehicle control device 11, a battery, etc. provided on the work vehicle 10. The battery is charged with electric power supplied from the generator. Electric components such as the vehicle control device 11 and the positioning unit 16 provided on the work vehicle 10 can be driven by electric power supplied from the battery even after the engine 131 is stopped.

The driving force of the engine 131 is transmitted to the front wheels 132 via the transmission 134 and the front axle 135, and is transmitted to the rear wheels 133 via the transmission 134 and the rear axle 136. The driving force of the engine 131 is also transmitted to the work machine 14 via a PTO shaft (not shown). When the work vehicle 10 performs automatic travel, the travel device 13 performs a travel operation according to a command from the vehicle control device 11.

Examples of the work machine 14 include a cultivator, a plowing machine, a reversing machine, a ridger, a weeding machine, and a pesticide applicator, which are detachably attached to the work vehicle 10. Thus, the work vehicle 10 can perform various types of work using the work machines 14. Fig. 2 shows a case where the work machine 14 is a cultivator.

The steering wheel 137 is an operation unit operated by an operator or the vehicle control device 11. For example, in the travel device 13, the angle of the front wheels 132 is changed by a hydraulic power steering mechanism (not shown) or the like in accordance with an operation of the steering wheel 137 by the vehicle control device 11, to change the traveling direction of the work vehicle 10. When the operator performs, for example, a teaching operation, the operator operates the steering wheel 137 to cause the work vehicle 10 to manually travel.

In addition to the steering wheel 137, the travel device 13 includes a shift lever, an accelerator, a brake, etc. (not shown) operated by the vehicle control device 11. In the travel device 13, a gear of the transmission 134 is switched to a forward gear, a reverse gear, or the like in accordance with an operation of the shift lever by the vehicle control device 11, to switch a travel mode of the work vehicle 10 to forward travel, backward travel, or the like. The vehicle control device 11 operates the accelerator to control the rotation speed of the engine 131. The vehicle control device 11 operates the brake to brake the rotation of the front wheels 132 and the rear wheels 133, using an electromagnetic brake.

The positioning unit 16 is a communication device including a positioning control unit 161, a storage unit 162, a communication unit 163, a positioning antenna 164, etc. For example, as shown in Fig. 2, the positioning unit 16 is provided on top of a cabin 18 that the operator boards. The installation place of the positioning unit 16 is not limited to the cabin 18. Further, the positioning control unit 161, the storage unit 162, the communication unit 163, and the positioning antenna 164 of the positioning unit 16 may be separately disposed at different locations on the work vehicle 10. As described above, the battery is connected to the positioning unit 16, and the positioning unit 16 can operate even while the engine 131 is stopped. The positioning unit 16 may be substituted, for example, by a mobile phone terminal, a smartphone, a tablet terminal, a quantum compass, or the like.

The positioning control unit 161 is a computer system including one or a plurality of processors and storage memory such as non-volatile memory and RAM. The storage unit 162 is a non-volatile memory or the like that stores a program for causing the positioning control unit 161 to perform a positioning process, and data such as positioning information and movement information. For example, the program is non-transitorily recorded on a computer-readable recording medium such as a flash ROM, an EEPROM, a CD, or a DVD, and is read by a predetermined reading device (not shown) and stored in the storage unit 162. The program may be downloaded from a server (not shown) to the positioning unit 16 via the communication network N1 and stored in the storage unit 162.

The communication unit 163 is a communication interface through which the positioning unit 16 is connected to the communication network N1 by wire or radio to perform data communication in compliance with a predetermined communication protocol with an external device such as a base station (not shown) via the communication network N1.

The positioning antenna 164 is an antenna that receives radio waves (GNSS signals) transmitted from satellites.

The positioning control unit 161 calculates the current position of the work vehicle 10, based on GNSS signals received by the positioning antenna 164 from satellites. For example, when the work vehicle 10 automatically travels in the field F, and the positioning antenna 164 receives a radio wave (transmission time, orbital information, etc.) transmitted from each of a plurality of satellites, the positioning control unit 161 calculates the distance between the positioning antenna 164 and the satellite, and calculates the current position (latitude and longitude) of the work vehicle 10 based on the calculated distances. The positioning control unit 161 may determine the position using a real-time kinematic method (an RTK-GNSS positioning method (RTK method)) in which the current position of the work vehicle 10 is calculated using correction information corresponding to a base station (reference station) near the work vehicle 10. Thus, the work vehicle 10 automatically travels using positioning information obtained with the RTK method. The current position of the work vehicle 10 may be the same as the determined position (e.g. the position of the positioning antenna 164), or may be a position different from the determined position. The positioning control unit 161 may calculate (determine) the current position of the work vehicle 10 using a quantum compass.

The vehicle control device 11 includes control equipment such as a CPU, ROM, and RAM. The CPU is a processor that executes various types of arithmetic processing. The ROM is a non-volatile storage unit in which control programs such as a BIOS and an OS for causing the CPU to execute the various types of arithmetic processing are stored in advance. The RAM is a volatile or non-volatile storage unit that stores various types of information, and is used as a temporary storage memory for various types of processing executed by the CPU. The vehicle control device 11 controls the work vehicle 10 by executing, with the CPU, the various control programs stored in advance in the ROM or the storage unit 12.

The vehicle control device 11 controls the operation of the work vehicle 10 according to various user operations on the work vehicle 10. The vehicle control device 11 performs the automatic travel process for the work vehicle 10, based on the current position of the work vehicle 10 calculated by the positioning unit 16 and a preset travel route.

Specifically, as shown in Fig. 1, the vehicle control device 11 includes various processing units such as a travel processing unit 111. The vehicle control device 11 functions as the various processing units by executing, with the CPU, various types of processing according to the automatic travel program. An electronic circuit may constitute part or all of the processing units. The automatic travel program may be a program for causing a plurality of processors to function as the processing units.

The travel processing unit 111 controls the travel of the work vehicle 10. For example, when the travel mode of the work vehicle 10 is automatic travel (an automatic travel mode), the travel processing unit 111 causes the work vehicle 10 to automatically travel, based on position information (positioning information) indicating the current position of the work vehicle 10 determined by the positioning unit 16. For example, when the work vehicle 10 satisfies an automatic travel start condition and acquires a travel start instruction from a user, the travel processing unit 111 causes the work vehicle 10 to start automatic travel based on the positioning information. The travel processing unit 111 causes the work vehicle 10 to automatically travel from the start position S to the end position G along the travel route R created in advance in the operation terminal 20 (see Fig. 3). For example, the travel processing unit 111 causes the work vehicle 10 to automatically travel along the plurality of work paths Ra along which to cause the work vehicle 10 to perform predetermined work and the plurality of turning paths Rb (non-work paths) connecting the work paths Ra, which are included in the travel route R.

Upon acquiring a travel stop instruction from the operation terminal 20, the travel processing unit 111 stops the automatic travel of the work vehicle 10. For example, when the user presses a stop button on an operation screen of the operation terminal 20, the operation terminal 20 outputs the travel stop instruction to the work vehicle 10.

When the travel mode of the work vehicle 10 is manual travel (a manual travel mode), the travel processing unit 111 causes the work vehicle 10 to manually travel based on the user's operation (manual steering). For example, the travel processing unit 111 acquires operation information corresponding to a driving operation by the user such as a steering operation, a gear shifting operation, a traveling direction switching operation, or a braking operation, and causes the travel device 13 to perform a travel operation based on the operation information. For example, when registering a field to be worked, the user boards the work vehicle 10 and causes the work vehicle 10 to manually travel an outer peripheral portion of an area to be worked in a predetermined area (teaching travel). During the teaching travel of the work vehicle 10, the user may cause the work machine 14 to descend and perform predetermined work (e.g. tilling work).

As described above, the work vehicle 10 has a configuration capable of automatically traveling in the field F along a travel route created in advance in the operation terminal 20. Thus, when an appropriate travel route is created, the work vehicle 10 can automatically travel. Therefore, to cause the work vehicle 10 to automatically travel, the user needs to appropriately input setting information necessary to create a travel route.

In this regard, with the conventional technique, when setting information input by the user is not appropriate and a travel route cannot be created, for example, it is difficult for the user to grasp the reason why the travel route cannot be created. This makes it difficult for the user to quickly input appropriate setting information when re-inputting the setting information, resulting in a problem of reduced work efficiency of work to create the travel route. In contrast, the automatic travel system 1 according to the present embodiment has a configuration capable of improving work efficiency of work to create a travel route along which to cause the work vehicle 10 to automatically travel. The following describes a detailed configuration of the operation terminal 20 having the above configuration.

### [Operation terminal 20]

As shown in Fig. 1, the operation terminal 20 is an information processing device including an operation control unit 21, a storage unit 22, an operation display unit 23, a communication unit 24, etc. The operation terminal 20 may be a mobile terminal such as a tablet terminal or a smartphone.

The communication unit 24 is a communication interface through which the operation terminal 20 is connected to the communication network N1 by wire or radio to perform data communication in compliance with a predetermined communication protocol with external devices such as the plurality of work vehicles 10 via the communication network N1.

The operation display unit 23 is a user interface including a display unit such as a liquid crystal display or an organic EL display that displays various types of information, and an operation unit such as a touch panel, a mouse, or a keyboard that receives operations. The user can operate the operation unit on an operation screen displayed on the display unit to perform operations of setting and registering various types of information (such as work vehicle information, field information, work machine information, work area information, and travel route information). The user can operate the operation unit to provide the travel start instruction, the travel stop instruction, and the like to the work vehicle 10. Further, at a place away from the work vehicle 10, the user can grasp the travel state of the work vehicle 10 automatically traveling along a travel route in the field F, using a travel path displayed on the operation terminal 20.

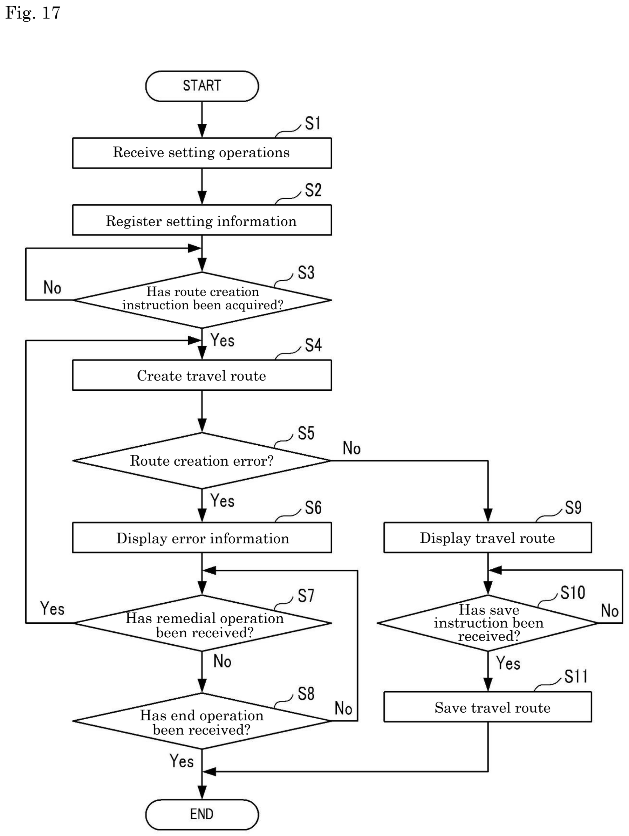

The storage unit 22 is a non-volatile storage unit such as an HDD, an SSD, or a flash memory that stores various types of information. The storage unit 22 stores a route creation program for causing the operation control unit 21 to perform a route creation process (see Fig. 17) to be described later, and control programs for causing the operation control unit 21 to perform various control processes. For example, the route creation program is non-transitorily recorded on a computer-readable recording medium such as a CD or a DVD, and is read by a predetermined reading device (not shown) and stored in the storage unit 22. The route creation program may be downloaded from a server (not shown) to the operation terminal 20 via the communication network N1 and stored in the storage unit 22.

The operation control unit 21 includes control equipment such as a CPU, ROM, and RAM. The CPU is a processor that executes various types of arithmetic processing. The ROM is a non-volatile storage unit in which control programs such as a BIOS and an OS for causing the CPU to execute the various types of arithmetic processing are stored in advance. The RAM is a volatile or non-volatile storage unit that stores various types of information, and is used as a temporary storage memory (work area) for various types of processing executed by the CPU. The operation control unit 21 controls the operation terminal 20 by executing, with the CPU, the various control programs stored in advance in the ROM or the storage unit 22.

As shown in Fig. 1, the operation control unit 21 includes various processing units such as a display processing unit 211, a reception processing unit 212, a setting processing unit 213, and a creation processing unit 214. The operation control unit 21 functions as the various processing units by executing, with the CPU, various types of processing according to the route creation program. An electronic circuit may constitute part or all of the processing units. The route creation program may be a program for causing a plurality of processors to function as the processing units.

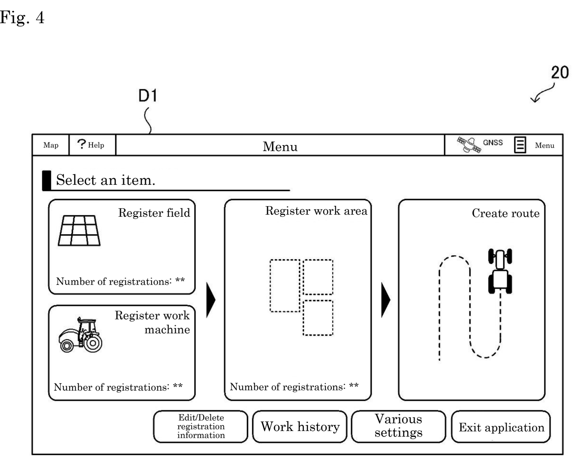

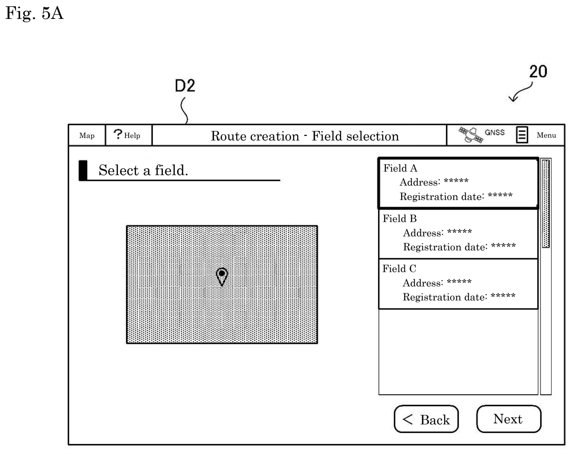

The display processing unit 211 displays various operation screens on the operation display unit 23 of the operation terminal 20. For example, the display processing unit 211 displays operation screens such as a menu screen D1 (see Fig. 4), a route creation screen (see Figs. 5A to 5J etc.), a field registration screen (not shown), a work machine registration screen (not shown), and a work area registration screen (not shown). The display processing unit 211 switches between the operation screens according to a user operation.

The reception processing unit 212 receives operations on each operation screen from the user. For example, the reception processing unit 212 receives, from the user, operations of inputting setting information necessary to create a travel route along which to cause the work vehicle 10 to automatically travel in a field. The setting information includes setting information on the field, setting information on the work machine 14, setting information on the work area, etc.

The setting processing unit 213 sets and registers various items according to user operations received by the reception processing unit 212. Specifically, the setting processing unit 213 sets and registers setting information on each of the field, the work machine 14, and the work area. For example, the setting processing unit 213 registers setting information on items of "Register field", "Register work machine", "Register work area", and "Create route" included in the menu screen D1 (see Fig. 4).

For example, the user selects "Register field" on the menu screen D1 and causes the work vehicle 10 to manually travel (teaching travel). The setting processing unit 213 acquires position information (measurement points) of the work vehicle 10 based on positioning information determined by the positioning unit 16 of the work vehicle 10. When the teaching travel is completed, the setting processing unit 213 registers an area enclosed by the measurement points (travel path) as an area (field) to be worked. The setting processing unit 213 can register a plurality of fields at different locations (addresses). The user can select a "Edit/Delete registration information" button on the menu screen D1 to change the settings of the field.

The user selects "Register work machine" on the menu screen D1 to input information on the work machine 14. For example, on the work machine registration screen (not shown), the user performs selection or input on items such as a work machine type (with no offset, with an offset, etc.), an overlap/offset, permission/non-permission of backward travel (backing), automatic/manual work machine ascent and descent, ON/OFF of PTO setting, a work machine width, a work width, a work machine length, and a registered name. The setting processing unit 213 sets and registers the items of the work machine 14 based on user operations. The setting processing unit 213 can register a plurality of work machines 14 of different models. The user can select the "Edit/Delete registration information" button on the menu screen D1 to change the settings of the work machine 14.

The user selects "Register work area" on the menu screen D1 to input information on an area in which to actually perform work. For example, on the work area registration screen (not shown), the user selects a field for which to register a work area, and selects desired measurement points (e.g. four corners of the field) among the measurement points of the travel path on a map corresponding to the selected field. The user selects one of the outer sides of the field on the map to select a work direction. The user sets, on the map, the start position S at which to start work and the end position G at which to end work in the field. The setting processing unit 213 sets and registers the work area based on user operations. Specifically, the setting processing unit 213 sets and registers the work area, the work direction, the start position S and the end position G, and the registered name for the field to be worked. The setting processing unit 213 can register one or a plurality of work areas for each field. The user can select the "Edit/Delete registration information" button on the menu screen D1 to change the settings of the work area.

The creation processing unit 214 creates a travel route (target route) along which to cause the work vehicle 10 to automatically travel, based on the setting information on the field, the setting information on the work machine 14, and the setting information on the work area.

For example, the user selects "Create route" on the menu screen D1 to create a travel route for the field and the work area registered in advance. A specific example of a travel route creation procedure will be described below.

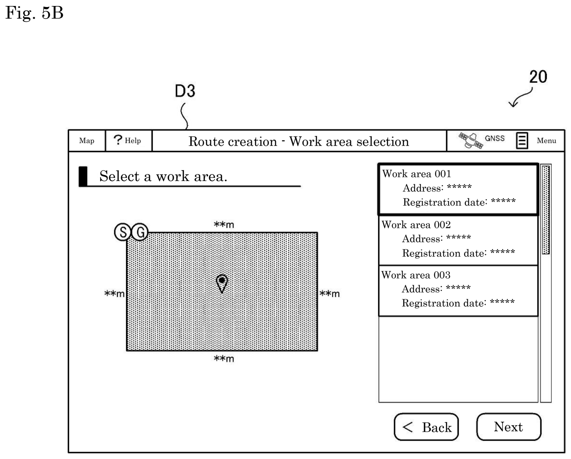

When the user selects "Create route" on the menu screen D1, the creation processing unit 214 displays a field selection screen D2 shown in Fig. 5A. The creation processing unit 214 displays one or a plurality of fields registered in advance on the field selection screen D2, and receives an operation of selecting a field for which to create a travel route from the user. When the user selects a field, the creation processing unit 214 displays a work area selection screen D3 shown in Fig. 5B. On the work area selection screen D3, the creation processing unit 214 displays one or a plurality of work areas registered in advance for the selected field, and receives an operation of selecting a work area for which to create a travel route from the user. The creation processing unit 214 displays a map of the work area selected by the user on the work area selection screen D3, and displays the setting information (such as the start position S and the end position G) registered in "Register work area" described above on the map.

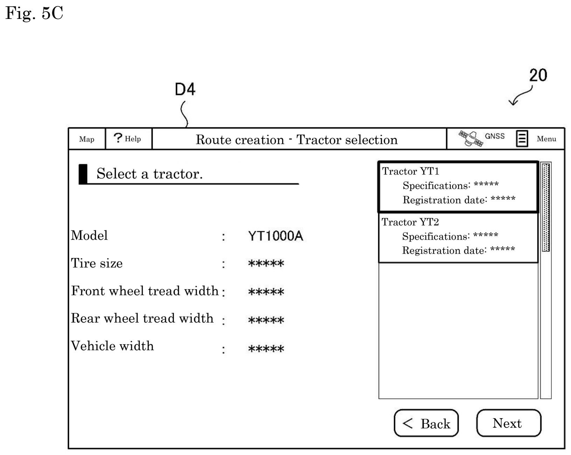

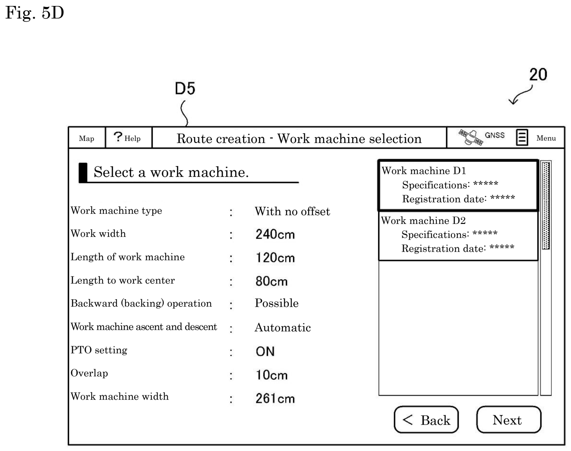

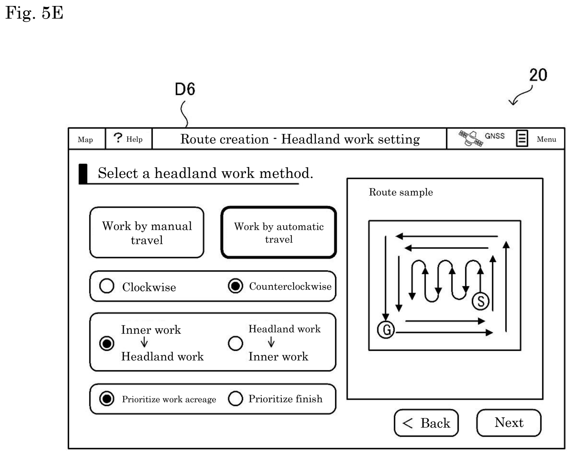

When the user selects a work area, the creation processing unit 214 displays a tractor selection screen D4 shown in Fig. 5C. On the tractor selection screen D4, the creation processing unit 214 displays one or a plurality of tractors registered in advance, and receives an operation of selecting a tractor from the user. When the user selects a tractor, the creation processing unit 214 displays a work machine selection screen D5 shown in Fig. 5D. On the work machine selection screen D5, the creation processing unit 214 displays one or a plurality of work machines 14 registered in advance, and receives an operation of selecting a work machine 14 from the user. On the work machine selection screen D5, the setting information registered in "Register work machine" described above is displayed. When the user selects a work machine 14, the creation processing unit 214 displays a headland work setting screen D6 shown in Fig. 5E.

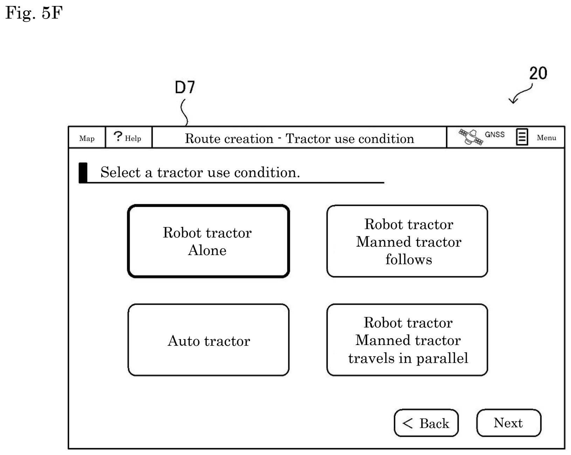

On the headland work setting screen D6, selection portions (selection buttons) for selecting whether to work the headland area F2 (see Fig. 3) by manual travel or by automatic travel, a selection portion for selecting whether to work the headland area F2 clockwise or counterclockwise, a selection portion for selecting whether to work the headland area F2 after working the work area F1 or before working the work area F1, and a selection portion for selecting whether to increase outer peripheral work (prioritize work acreage) or decrease outer peripheral work (prioritize finish) are displayed. The creation processing unit 214 receives user operations on the selection portions and sets and registers the items. When the user makes selections on the items, the creation processing unit 214 displays a tractor use condition screen D7 shown in Fig. 5F.

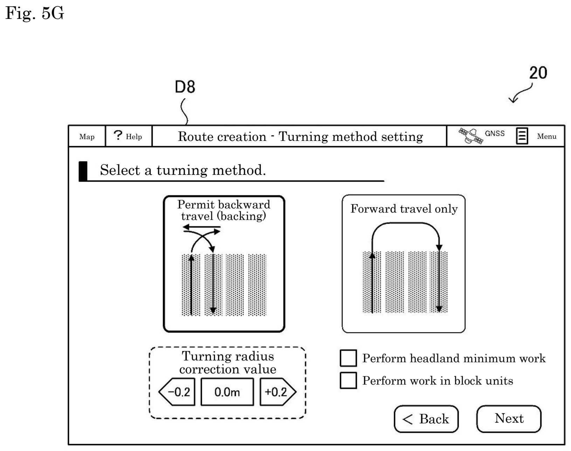

On the tractor use condition screen D7, the user selects a tractor use condition. The use conditions include "Robot tractor Alone" in which work is performed by unmanned automatic travel, "Auto tractor" in which work is performed by manned automatic travel, "Robot tractor Manned tractor follows" in which a manned tractor travels after a robot tractor, and "Robot tractor Manned tractor travels in parallel" in which a manned tractor travels in parallel with a robot tractor. The creation processing unit 214 sets and registers the use condition according to the user's selection operation. When the user selects the use condition, the creation processing unit 214 displays a turning method setting screen D8 shown in Fig. 5G.

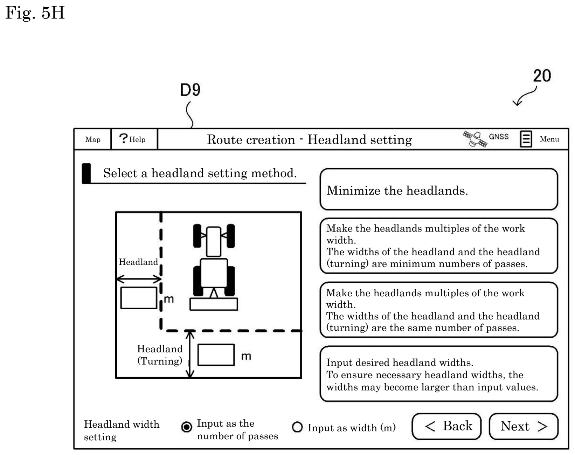

On the turning method setting screen D8, the user selects a method of turning the work vehicle 10 in the headland area F2. Specifically, the user selects whether to permit backward travel (backing) ("Permit backward travel (backing)") or prohibit backward travel and permit forward travel only ("Forward travel only"). The creation processing unit 214 sets and registers the turning method according to the user's selection operation. The user can adjust the turning radius on the turning method setting screen D8. Further, on the turning method setting screen D8, the user can select a setting for reducing a work area in the headland area F2 ("Perform headland minimum work"), and a setting for performing work in block units. When the user selects the turning method, the creation processing unit 214 displays a headland setting screen D9 shown in Fig. 5H.

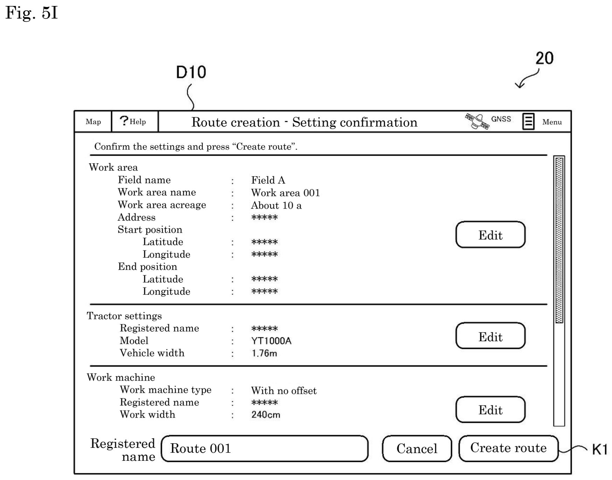

On the headland setting screen D9, the user selects a headland setting method. Specifically, the user selects one of a first setting method in which the headland widths are minimized, a second setting method in which the headland widths are minimum numbers of passes, a third setting method in which the headland widths are the same number of passes, and a fourth setting method in which the user sets (inputs) desired headland widths. The creation processing unit 214 registers the headland setting method according to the user's selection operation. When the user selects the headland setting method, the creation processing unit 214 displays a setting confirmation screen D10 shown in Fig. 5I.

The creation processing unit 214 displays a list of the pieces of setting information on the setting confirmation screen D10. The user can confirm the pieces of setting information at one time on the setting confirmation screen D10. The user can change the setting information by pressing an "Edit" button on each item. The user presses a route creation button K1 after confirming the pieces of setting information on the setting confirmation screen D10.

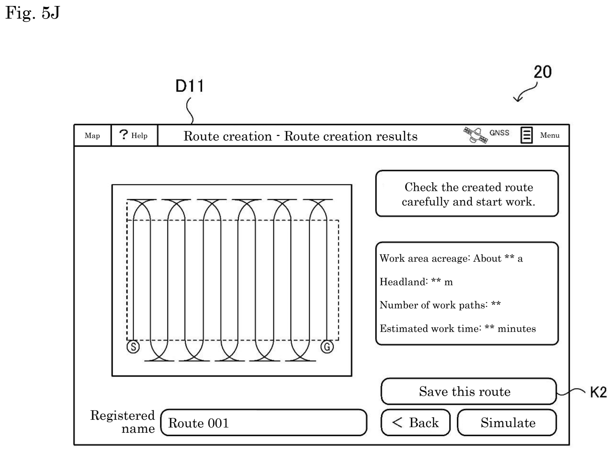

When the user presses the route creation button K1, the creation processing unit 214 creates a travel route for the work area of the field of interest, based on the pieces of setting information. The creation processing unit 214 displays the created travel route on a route creation result screen D11 shown in Fig. 5J. On the route creation result screen D11, the creation processing unit 214 displays the travel route on the field map, and displays the size (acreage) of the work area, the headland width, the number of work paths, estimated work time, etc. After confirming the travel route, the user presses a save button K2. When the user presses the save button K2, the creation processing unit 214 registers the data of the travel route, the name (registered name) of the travel route, and the field in association with each other.

Here, if the setting information set by the user is not appropriate and a travel route error (route creation error) occurs, the creation processing unit 214 displays error information. Specifically, if the creation processing unit 214 that has received a route creation instruction (an operation of pressing the route creation button K1) from the user to create a travel route cannot create the travel route in at least one portion between the start position S and the end position G (if a route creation error occurs), the creation processing unit 214 displays error information on the route creation result screen D11. Specific examples of the route creation error and the error information will be described below.

### [First specific example]

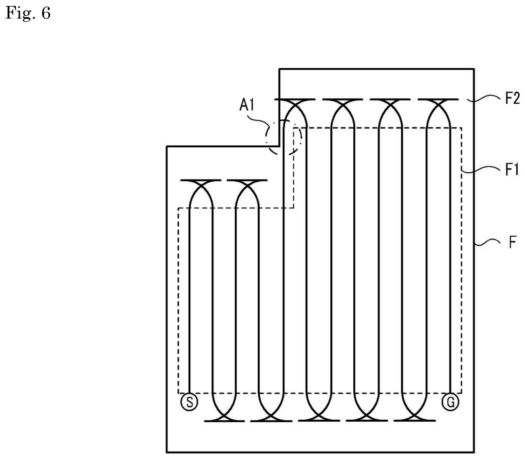

Fig. 6 shows the field F according to a first specific example. In the field F shown in Fig. 6, the creation processing unit 214 cannot create an appropriate travel route because the headland width is small at a location A1 (error location) on the way from the start position S to the end position G.

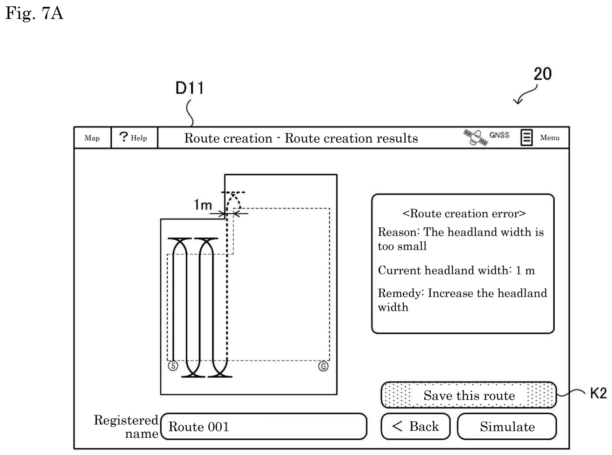

In this case, the display processing unit 211 displays the reason why the travel route cannot be created on the route creation result screen D11. For example, as shown in Fig. 7A, the display processing unit 211 displays a message indicating that a route creation error has occurred and the reason why the route creation error has occurred. In the example shown in Fig. 6, the display processing unit 211 displays the fact that the headland width is too small as the reason.

The display processing unit 211 identifiably displays the error location A1 on the map of the field F on the route creation result screen D11. For example, as shown in Fig. 7A, the display processing unit 211 highlights the travel route (here, a work path and a turning path) corresponding to the error location A1.

As shown in Fig. 7A, the display processing unit 211 displays a partial route from the start position S to the error location A1 on the map of the field F on the route creation result screen D11. That is, the creation processing unit 214 displays a partial travel route that has been able to be appropriately created from the start position S. The display processing unit 211 displays the partial route in a first mode (a solid line, black, etc.), and displays the work path and the turning path corresponding to the error location A1 in a second mode (a dotted line, red, etc.). This allows the user to grasp how far the appropriate travel route has been able to be created.

The display processing unit 211 displays the current setting state of the error location A1 and a remedy (correction method) for correcting the route creation error on the route creation result screen D11. In the example shown in Fig. 7A, the display processing unit 211 displays "1 m" that is the current headland width, and displays information prompting an operation of increasing the headland width as the remedy. As shown in Fig. 7A, the display processing unit 211 may display the current headland width ("1 m") at the error location A1 on the map of the field F.

As another embodiment, when a route creation error occurs, the display processing unit 211 may provisionally create and display a travel route from the start position S to the end position G, and identifiably display the error location A1 on the travel route. Whether the display processing unit 211 displays a partial route from the start position S to the error location A1 when a route creation error occurs (see Fig. 7A) or provisionally displays a travel route from the start position S to the end position G when a route creation error occurs may be selected or switched by the user.

When a route creation error occurs, the display processing unit 211 may set the save button K2 to be grayed out (see Fig. 7A) or hidden to make the save button K2 unselectable. Alternatively, when the user presses the save button K2, the display processing unit 211 may display (pop up) the error information.

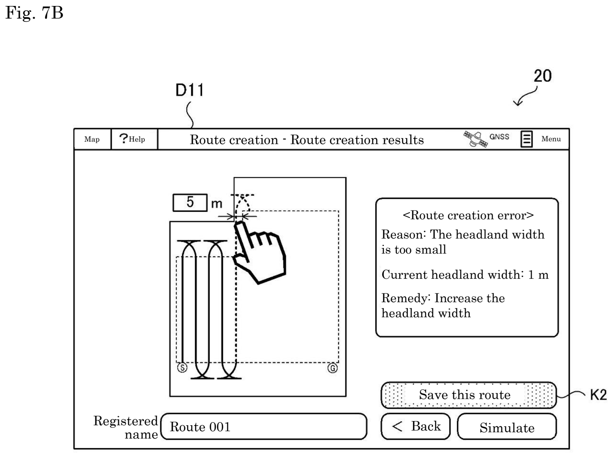

When the route creation error occurs and the error information is displayed, the user performs a predetermined operation to correct the route creation error according to the remedy. The creation processing unit 214 receives the user operation and recreates the travel route. For example, as shown in Fig. 7B, when the user selects the error location A1 on the map on the route creation result screen D11, the creation processing unit 214 displays an input field for inputting a headland width corresponding to the correction method in association with the error location A1, and receives an operation of inputting a value of the headland width from the user. That is, the creation processing unit 214 receives an operation of re-inputting the setting information on the route creation result screen D11. The creation processing unit 214 may provisionally display, in the input field, a recommended value of the headland width calculated based on the pieces of setting information, and receive an operation of changing the recommended value from the user.

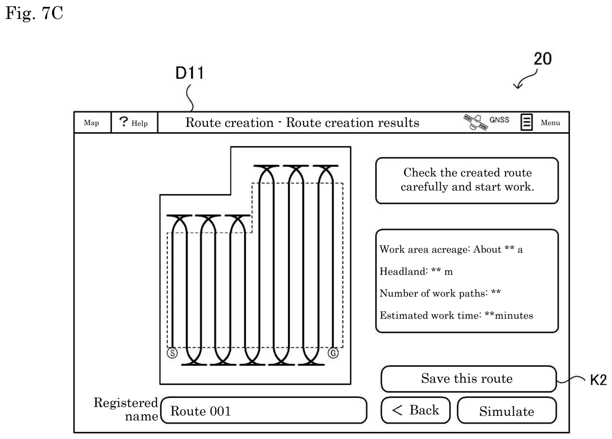

When the headland width is changed, the creation processing unit 214 recreates the travel route based on the changed headland width. When the route creation error is corrected and the travel route can be appropriately created from the start position S to the end position G, the creation processing unit 214 displays the travel route on the route creation result screen D11 as shown in Fig. 7C. The display processing unit 211 displays the save button K2 in a selectable manner. When the route creation error occurs, the above configuration allows the user to grasp the reason for the route creation error and thus quickly recreate the travel route.

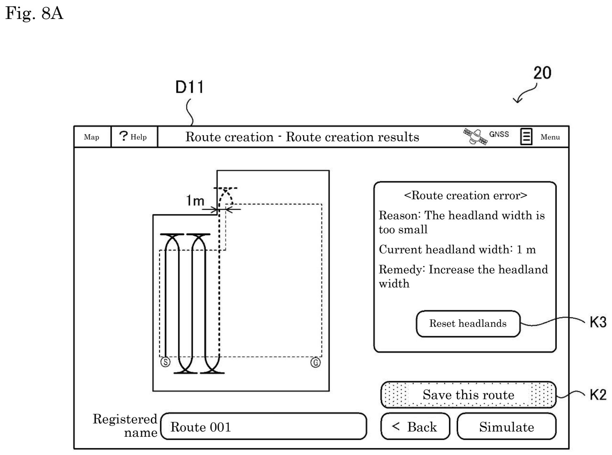

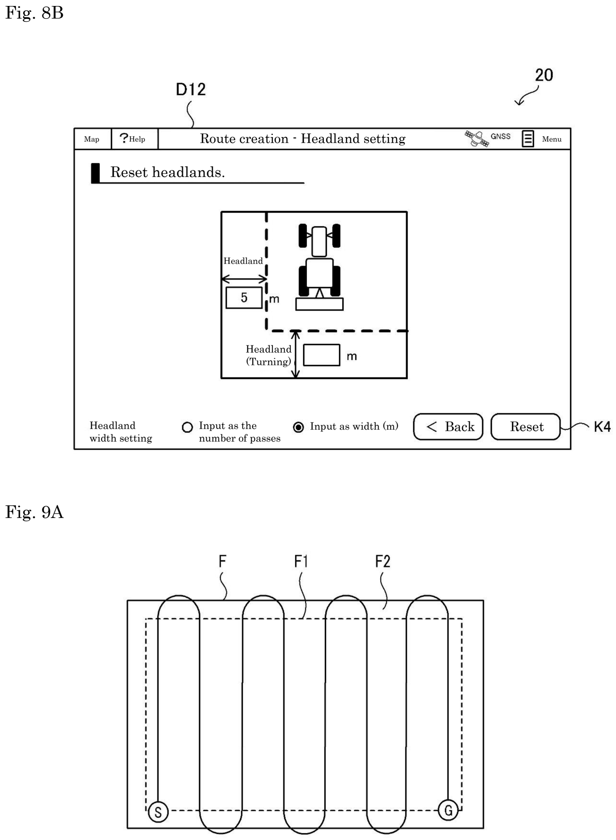

In the above-described configuration, when the route creation error occurs, the user performs an operation to correct the route creation error on the route creation result screen D11. As another embodiment, the user may perform an operation to correct the route creation error on a setting screen for the setting information that has caused the route creation error. Specifically, as shown in Fig. 8A, when the route creation error occurs, the display processing unit 211 displays a headland width reset button K3 (an example of a first operation portion of the present invention) on the route creation result screen D11. When the user presses the headland width reset button K3, the display processing unit 211 displays a headland setting screen D12 shown in Fig. 8B. The display processing unit 211 may display the headland setting screen D9 shown in Fig. 5H.

The creation processing unit 214 receives an operation of inputting a value of the headland width from the user on the headland setting screen D12. The creation processing unit 214 may provisionally display, in the input field, a recommended value of the headland width calculated based on the pieces of setting information, and receive an operation of changing the recommended value from the user. When the user inputs the headland width and presses a reset button K4, the creation processing unit 214 recreates the travel route based on the changed headland width. When the route creation error is corrected and the travel route can be appropriately created from the start position S to the end position G, the creation processing unit 214 displays the travel route on the route creation result screen D11 as shown in Fig. 7C.

### [Second specific example]

Fig. 9A shows the field F according to a second specific example. In the field F shown in Fig. 9A, the headland width of turning areas of the headland area F2 is small, so that the work vehicle 10 runs out of the field when traveling along the travel route. Thus, an appropriate travel route cannot be created.

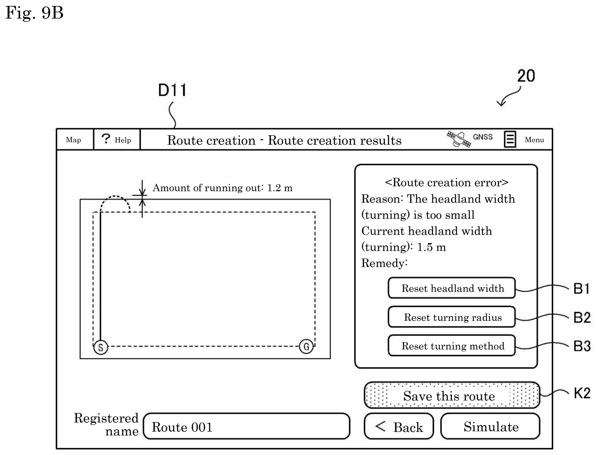

In this case, as shown in Fig. 9B, the display processing unit 211 displays, on the route creation result screen D11, the fact that the headland width of the turning areas is too small as the reason why the travel route cannot be created. On the route creation result screen D11, the display processing unit 211 displays a partial route from the start position S to an error location (the headland area F2) on the map of the field F, and identifiably displays a turning path corresponding to the error location. The display processing unit 211 may display the amount of running out of the work vehicle 10 to the outside of the field.

In a case where there is a plurality of remedies, the display processing unit 211 displays the plurality of remedies on the route creation result screen D11. Here, the display processing unit 211 displays a first remedy of resetting the headland width (reset button B1), a second remedy of resetting the turning radius (reset button B2), and a third remedy of resetting the turning method (reset button B3) in a selectable manner. The reset buttons B1 to B3 are examples of the first operation portion of the present invention. When the user presses the reset button B1, the creation processing unit 214 receives an operation of changing the headland width from the user on the route creation result screen D11 or the headland setting screen (see Figs. 5H and 8B). The creation processing unit 214 recreates the travel route based on the changed headland width.

When the user presses the reset button B2, the creation processing unit 214 receives an operation of changing the turning radius from the user on the route creation result screen D11 or the turning method setting screen D8 (see Fig. 5G). The creation processing unit 214 recreates the travel route based on the changed turning radius.

When the user presses the reset button B3, the creation processing unit 214 receives an operation of changing the turning method from the user on the route creation result screen D11 or the turning method setting screen D8 (see Fig. 5G). For example, the user changes the turning method from "Forward travel only" to "Permit backward travel" or enables "Perform headland minimum work". The creation processing unit 214 recreates the travel route based on the changed turning method.

As another embodiment, the display processing unit 211 may display a recommended one of the first to third remedies, based on the setting information such as the details of work and the work machine type, work history information, etc. Alternatively, the display processing unit 211 may determine the order of priority for the first to third remedies, based on the setting information such as the details of work and the work machine type, work history information, etc., and display the first to third remedies in the order of priority.

### [Third specific example]

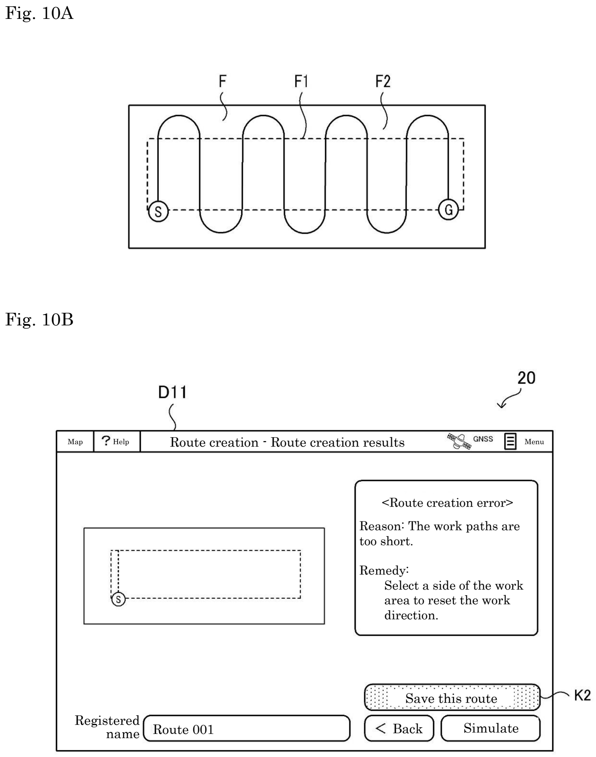

Fig. 10A shows the field F according to a third specific example. In the field F shown in Fig. 10A, the distance of each work path is too short, so that appropriate work paths cannot be created in the work area F1. Specifically, the work direction is set to the direction of short sides of the field outer shape, so that the distance of each work path in the work area F1 is too short.

In this case, as shown in Fig. 10B, the display processing unit 211 displays, on the route creation result screen D11, the fact that the work paths are too short as the reason why the travel route cannot be created. The display processing unit 211 identifiably displays the first work path corresponding to an error location on the map of the field F on the route creation result screen D11.

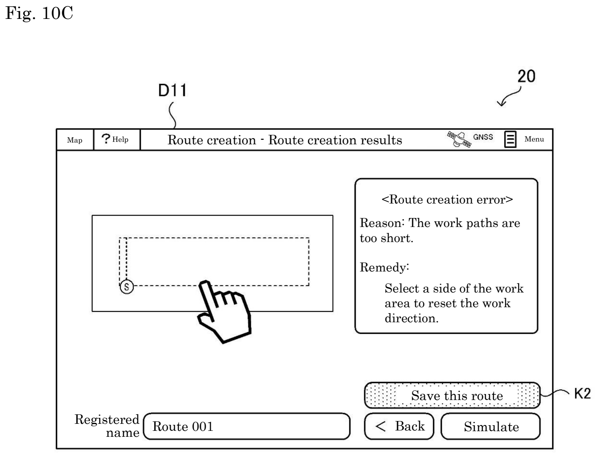

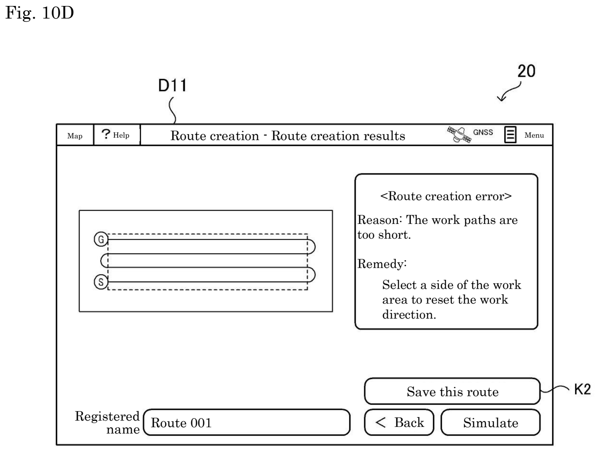

The display processing unit 211 displays information prompting an operation of changing the work direction as a remedy. For example, as shown in Fig. 10C, when the user selects a long side of the work area F1 on the map of the route creation result screen D11, the creation processing unit 214 changes the work direction to the direction of the long side. The creation processing unit 214 recreates the travel route based on the changed work direction. When the route creation error is corrected and the travel route can be appropriately created from the start position S to the end position G, the creation processing unit 214 displays the travel route on the route creation result screen D11 as shown in Fig. 10D. The display processing unit 211 may display information prompting an operation of adjusting the headlands (an operation of changing the headland width, turning radius, turning method, or the like).

As another embodiment, the creation processing unit 214 may display the work area registration screen (not shown) displayed in "Register work area" described above (see Fig. 4) and receive an operation of changing the work direction from the user.

As still another embodiment, when the route creation error due to the work direction occurs, the creation processing unit 214 may automatically change the work direction to recreate the travel route.

### [Fourth specific example]

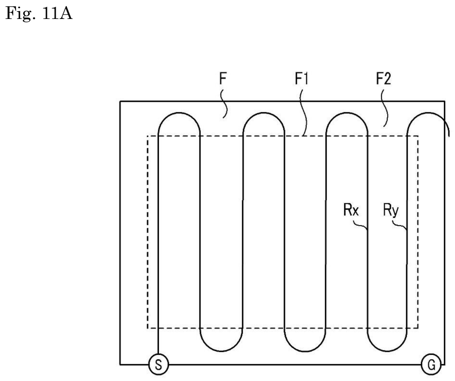

Fig. 11A shows the field F according to a fourth specific example. In the field F shown in Fig. 11A, the headland width in the lateral direction (side width) is small with respect to the work direction, and thus it is not possible to create a travel route at the end. Specifically, the work vehicle 10 runs out of the field in the headland area F2 on the end side, and an appropriate travel route cannot be created. A similar problem can occur during backward travel. Here, processing at the time of forward travel is taken as an example, but similar processing is executed at the time of backward travel.

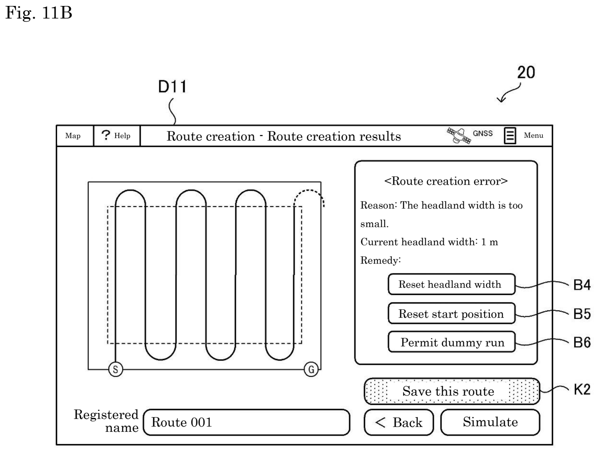

In this case, as shown in Fig. 11B, the display processing unit 211 displays, on the route creation result screen D11, the fact that the headland width is too small as the reason why the travel route cannot be created. The display processing unit 211 identifiably displays a turning path on the end side corresponding to an error location on the map of the field F on the route creation result screen D11.

In the above example, there is a plurality of remedies. Thus, the display processing unit 211 displays the plurality of remedies on the route creation result screen D11. For example, the display processing unit 211 displays a first remedy of resetting the headland width (reset button B4), a second remedy of resetting the start position S (reset button B5), and a third remedy of permitting a dummy run (reset button B6) in a selectable manner. The reset buttons B4 to B6 are examples of the first operation portion of the present invention. When the user presses the reset button B4, the creation processing unit 214 receives an operation of changing the headland width from the user on the route creation result screen D11 or the headland setting screen (see Figs. 5H and 8B). The creation processing unit 214 recreates the travel route based on the changed headland width.

When the user presses the reset button B5, the creation processing unit 214 receives an operation of changing the start position S from the user on the route creation result screen D11. For example, when the user changes the start position S from the current lower side to the upper side, the turning path on the end side moves from the current upper side to the lower side, so that the turning path is easily connected to the end position G. As another embodiment, the creation processing unit 214 may display the work area registration screen (not shown) displayed in "Register work area" described above (see Fig. 4) and receive an operation of changing the start position S from the user.

When the user presses the reset button B6, the creation processing unit 214 displays a setting screen (not shown) for permitting a dummy run (travel without work), and receives an operation of permitting a dummy run. When a dummy run is permitted, in the work area F1 shown in Fig. 11A, for example, the work vehicle 10 travels without working (travels without load) along a work path Rx from the upper side to the lower side, then travels while working along a work path Ry from the lower side to the upper side, then travels while working along the work path Rx from the upper side to the lower side, and then turns on the lower side and goes to the end position G. This allows the creation of a travel route along which the work vehicle 10 does not run out of the field when turning on the end side.

As another embodiment, the display processing unit 211 may display a recommended one of the first to third remedies, based on the setting information such as the details of work and the work machine type, work history information, etc. Alternatively, the display processing unit 211 may determine the order of priority for the first to third remedies, based on the setting information such as the details of work and the work machine type, work history information, etc., and display the first to third remedies in the order of priority. As another embodiment, the creation processing unit 214 may create a travel route up to a point just before the end position G. Specifically, the creation processing unit 214 may create a travel route up to the end of the final work path Ry or a position at a predetermined distance from the end. Alternatively, the creation processing unit 214 may reset the end position G to the end of the work path Ry or a position at a predetermined distance from the end, to create a travel route. The display processing unit 211 may display, on the route creation result screen D11, a fourth remedy of creating a travel route up to the end of the work path Ry or a position at a predetermined distance from the end in a selectable manner.

### [Fifth specific example]

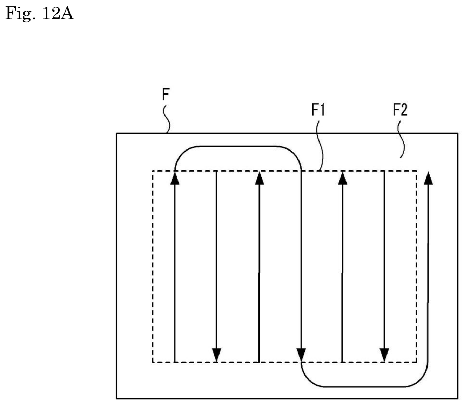

Fig. 12A shows the field F according to a fifth specific example. In the field F shown in Fig. 12A, the number of skips of work paths is large, and the work vehicle 10 runs out of the work area F1 by forward travel only, and it is not possible to create an appropriate travel route in the work area F1.

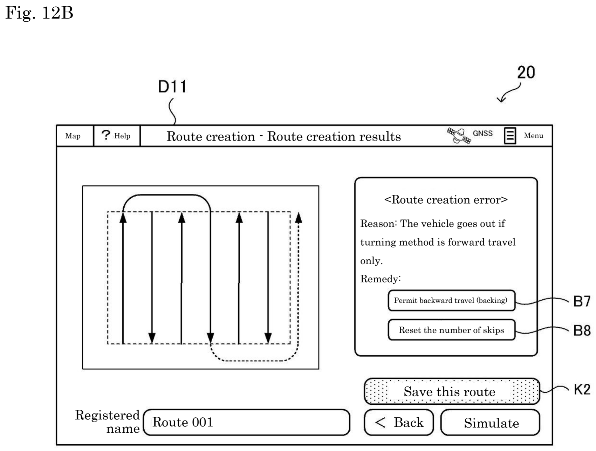

In this case, as shown in Fig. 12B, the display processing unit 211 displays, on the route creation result screen D11, the fact that the turning method is forward travel only as the reason why the travel route cannot be created. The display processing unit 211 identifiably displays a turning path corresponding to an error location on the map of the field F on the route creation result screen D11.

The display processing unit 211 displays, as a remedy, information prompting an operation of changing the turning method to the turning method "Permit backward travel". The display processing unit 211 may display information prompting an operation of changing the number of skips. The display processing unit 211 may display the remedies in a selectable manner. For example, the display processing unit 211 displays a first remedy of resetting the turning method (reset button B7) and a second remedy of resetting the number of skips (reset button B8) in a selectable manner. The reset buttons B7 and B8 are examples of the first operation portion of the present invention.

When the user presses the reset button B7, the creation processing unit 214 receives an operation of changing the turning method ("Permit backward travel (backing)") from the user on the route creation result screen D11 or the turning method setting screen D8 (see Fig. 5G). The creation processing unit 214 recreates the travel route based on the changed turning method.

When the user presses the reset button B8, the creation processing unit 214 receives an operation of changing the number of skips from the user on the route creation result screen D11 or a setting screen (not shown) for setting the number of skips. The creation processing unit 214 recreates the travel route based on the changed number of skips.

### [Sixth specific example]

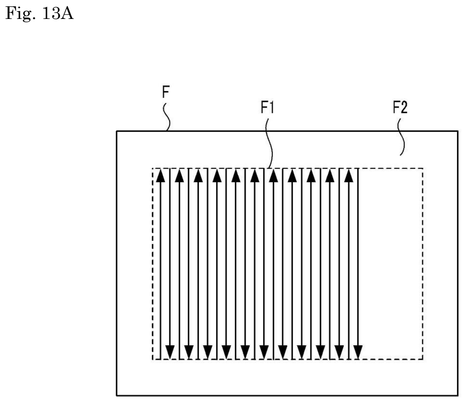

Fig. 13A shows the field F according to a sixth specific example. In the field F shown in Fig. 13A, the number of work paths has reached the upper limit, and appropriate work paths cannot be created in the work area F1. Specifically, the work width is too small or the work area is too large, so that the number of work paths has reached the upper limit, and appropriate work paths cannot be created in the work area F1.

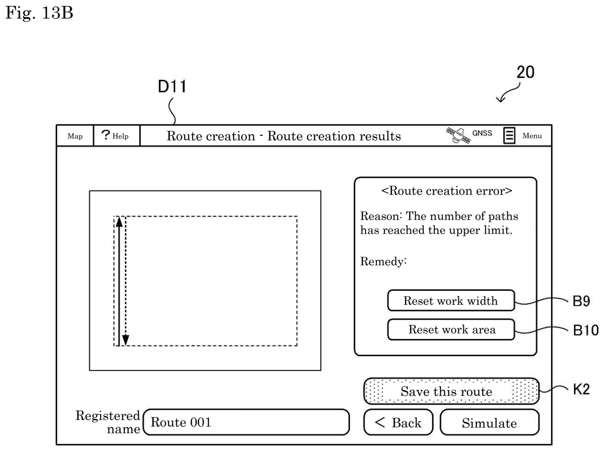

In this case, as shown in Fig. 13B, the display processing unit 211 displays, on the route creation result screen D11, the fact that the number of work paths has reached the upper limit as the reason why the travel route cannot be created. The display processing unit 211 identifiably displays the second work path corresponding to an error location on the map of the field F on the route creation result screen D11.

The display processing unit 211 displays information prompting an operation of changing the work width as a remedy. The display processing unit 211 may display information prompting an operation of changing the work area. The display processing unit 211 may display the remedies in a selectable manner. For example, the display processing unit 211 displays a first remedy of resetting the work width (reset button B9) and a second remedy of resetting the work area (reset button B10) in a selectable manner. The reset buttons B9 and B10 are examples of the first operation portion of the present invention.

When the user presses the reset button B9, the creation processing unit 214 receives an operation of changing the work width from the user on the route creation result screen D11 or a setting screen (not shown) for setting the work width. The creation processing unit 214 recreates the travel route based on the changed work width.

When the user presses the reset button B10, the creation processing unit 214 receives an operation of changing the work area from the user on the route creation result screen D11 or the work area registration screen (not shown) displayed in "Register work area" described above (see Fig. 4). The creation processing unit 214 recreates the travel route based on the changed work area.

### [Seventh specific example]

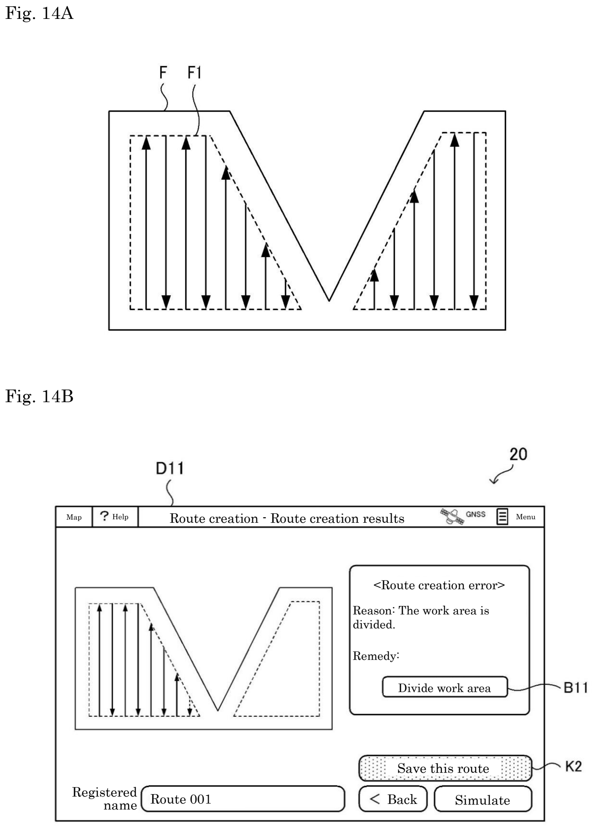

Fig. 14A shows the field F according to a seventh specific example. In the field F shown in Fig. 14A, a portion of the field F is narrow, dividing the work area F1. Thus, appropriate work paths cannot be created in a single work area F1.

In this case, as shown in Fig. 14B, the display processing unit 211 displays, on the route creation result screen D11, the fact that the work area is divided in the field F as the reason why the travel route cannot be created. The display processing unit 211 identifiably displays a work path at the end in one of the work areas corresponding to an error location on the map of the field F on the route creation result screen D11.

The display processing unit 211 displays information prompting an operation of dividing the work area as a remedy. When the user presses a reset button B11 (an example of the first operation portion of the present invention), the creation processing unit 214 receives an operation of changing the work area from the user on the route creation result screen D11 or the work area registration screen (not shown). The creation processing unit 214 recreates the travel route based on the changed work area. Here, the creation processing unit 214 sets two work areas for the field F and creates a travel route for each work area.

### [Eighth specific example]

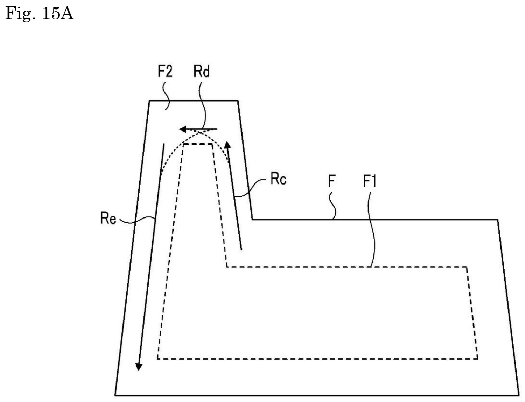

Fig. 15A shows the field F according to an eighth specific example. In the field F shown in Fig. 15A, one side of the work area F1 is a short side, and a travel route along which to travel in the headland area F2 cannot be appropriately created. For example, when the work vehicle 10 travels along straight paths Rc, Rd, and Re in this order in the headland area F2, the distance of the straight path Rd is too short, so that the work vehicle 10 cannot move from the straight path Rd to the straight path Re by forward travel only.

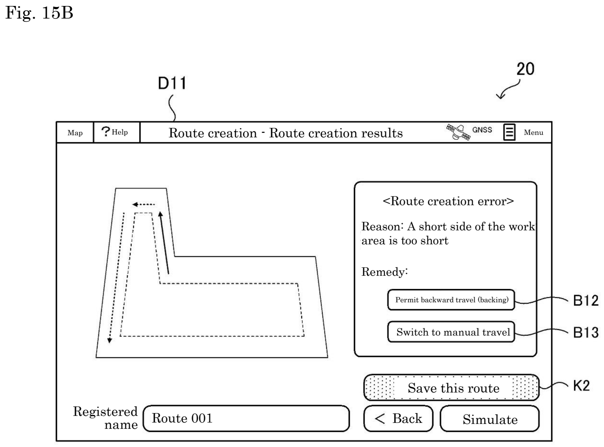

In this case, as shown in Fig. 15B, the display processing unit 211 displays, on the route creation result screen D11, the fact that the short side of the work area is too short as the reason why the travel route cannot be created. The display processing unit 211 identifiably displays headland paths on the side of the short side corresponding to an error location on the map of the field F on the route creation result screen D11.

The display processing unit 211 displays, as a remedy, information prompting an operation of changing the turning method to the turning method "Permit backward travel". The display processing unit 211 may display information prompting an operation of switching to manual travel. The display processing unit 211 may display the remedies in a selectable manner. For example, the display processing unit 211 displays a first remedy of resetting the turning method (reset button B12) and a second remedy of switching to manual travel (reset button B13) in a selectable manner. The reset buttons B12 and B13 are examples of the first operation portion of the present invention. The display processing unit 211 may display a problem that may occur when backward travel is permitted in association with the reset button B12. For example, when backward travel is permitted, the work vehicle 10 travels forward (works forward) along the straight path Rc, then performs backward travel, forward travel (forward work), and backward travel in this order on the straight path Rd, and moves to the straight path Re. Since the work vehicle 10 thus travels back and forth on the straight path Rd, there may arise a problem that the field is trampled. Therefore, when the remedy "Permit backward travel" is selected, the display processing unit 211 displays a message indicating that the above problem may occur in association with the reset button B12 to call the user's attention.

When the user presses the reset button B12, the creation processing unit 214 receives an operation of changing the turning method ("Permit backward travel (backing)") from the user on the route creation result screen D11 or the turning method setting screen D8 (see Fig. 5G). The creation processing unit 214 recreates the travel route based on the changed turning method.

When the user presses the reset button B13, the creation processing unit 214 receives an operation of switching to manual travel from the user on the route creation result screen D11 or the headland work setting screen D6 (see Fig. 5E). The creation processing unit 214 stops creating a route for the headland area F2 and creates only a travel route for the work area F1.

### [Ninth specific example]

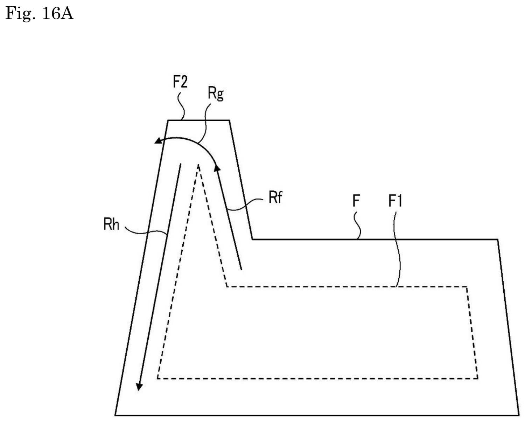

Fig. 16A shows the field F according to a ninth specific example. In the field F shown in Fig. 16A, a portion of the work area F1 is narrow, and a travel route along which to travel in the headland area F2 cannot be appropriately created. For example, when the work vehicle 10 travels along a straight path Rf, a turning path Rg, and a straight path Rh in this order in the headland area F2, the work vehicle 10 cannot move from the turning path Rg to the straight path Rh because the turning area is too small.

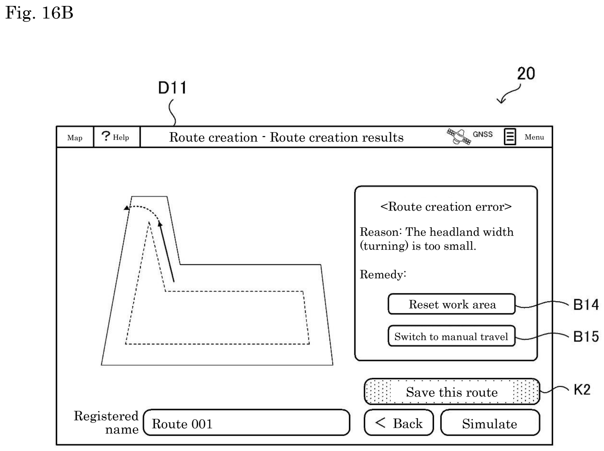

In this case, as shown in Fig. 16B, the display processing unit 211 displays, on the route creation result screen D11, the fact that the headland width of a turning area is too small as the reason why the travel route cannot be created. The display processing unit 211 identifiably displays a turning path corresponding to an error location on the map of the field F on the route creation result screen D11.

The display processing unit 211 displays information prompting an operation of changing the work area as a remedy. The display processing unit 211 may display information prompting an operation of switching to manual travel. The display processing unit 211 may display the remedies in a selectable manner. For example, the display processing unit 211 displays a first remedy of resetting the work area (reset button B 14) and a second remedy of switching to manual travel (reset button B15) in a selectable manner. The reset buttons B14 and B15 are examples of the first operation portion of the present invention.

When the user presses the reset button B14, the creation processing unit 214 receives an operation of changing the work area from the user on the route creation result screen D11 or the work area registration screen (not shown). The creation processing unit 214 recreates the travel route based on the changed work area. Here, the creation processing unit 214 deletes the narrow portion to set a rectangular work area, and creates a travel route for the work area.

When the user presses the reset button B15, the creation processing unit 214 receives an operation of switching to manual travel from the user on the route creation result screen D11 or the headland work setting screen D6 (see Fig. 5E). The creation processing unit 214 stops creating a route for the headland area F2 and creates only a travel route for the work area F1.

The above-described first to ninth specific examples are examples of the route creation error and the error information. For route creation errors other than those in the first to ninth specific examples, the creation processing unit 214 can similarly present error information and remedies to the user. When a route creation error occurs, the user can check error information and a remedy to quickly recreate an appropriate travel route.

The operation control unit 21 transfers route data of an appropriately created travel route to the work vehicle 10. For example, when the user gives the travel start instruction, the operation control unit 21 transmits (outputs) route data of the travel route R (for example, see Fig. 3) created by the creation processing unit 214 to the work vehicle 10. Upon receiving the route data created in the operation terminal 20, the work vehicle 10 stores the route data in the storage unit 12. The work vehicle 10 performs automatic travel (automatic steering and automatic work) based on the current position of the work vehicle 10 calculated by the positioning unit 16 and the travel route R specified in the route data.

The operation terminal 20 may be able to access the website of an agricultural support service (agricultural support site) provided by a server via the communication network N1. In this case, the operation terminal 20 can function as a terminal for the operation of the server by an operation control unit executing a browser program. The server includes the processing units described above and executes the pieces of processing.

### [Route creation process]

With reference to Fig. 17, the following describes an example of the route creation process performed by the operation control unit 21 of the operation terminal 20. For example, the route creation process is started by the operation control unit 21 when the operation control unit 21 receives operations to create a travel route of the work vehicle 10 from the user.

The present invention may be regarded as an invention of a route creation method of performing part or all of the route creation process by the operation control unit 21 (an example of a route creation method of the present invention), or an invention of a route creation program for causing the operation control unit 21 to perform part or all of the route creation method (an example of a route creation program of the present invention). The route creation process may be performed by one or a plurality of processors.

### <Step S1>

In step S1, the operation control unit 21 receives, from the user, operations of inputting setting information necessary to create a travel route along which to cause the work vehicle 10 to automatically travel in a field. Specifically, the operation control unit 21 receives, from the user, operations of inputting setting information on the field, setting information on the work machine 14, and setting information on the work area.

For example, the user selects "Register field" on the menu screen D1 (see Fig. 4) displayed on the operation terminal 20, and causes the work vehicle 10 to manually travel (teaching travel). The operation control unit 21 acquires measurement points corresponding to the travel path of the teaching travel, and registers an area enclosed by the measurement points as a field to be worked.

The user selects "Register work machine" on the menu screen D1, and performs selection or input on information on the work machine 14, for example, items such as a work machine type (with no offset, with an offset, etc.), an overlap/offset, permission/non-permission of backward travel (backing), automatic/manual work machine ascent and descent, ON/OFF of PTO setting, a work machine width, a work width, a work machine length, and a registered name. The operation control unit 21 receives operations of inputting the pieces of setting information on the work machine 14 from the user.

The user selects "Register work area" on the menu screen D1 to input information on a work area in which to actually perform work. For example, the user selects a field to be worked, and selects desired measurement points (four corners of the field) among the measurement points of the travel path on a map corresponding to the selected field. The user sets the work direction, the start position S, and the end position G. The operation control unit 21 receives operations of inputting the pieces of setting information on the work area from the user.

### <Step S2>

In step S2, the operation control unit 21 registers the pieces of setting information acquired according to the user's setting operations. Specifically, the operation control unit 21 registers each of the setting information on the field, the setting information on the work machine 14, and the setting information on the work area.

### <Step S3>

In step S3, the operation control unit 21 determines whether or not an instruction to create a travel route that is a target route along which to cause the work vehicle 10 to automatically travel (route creation instruction) has been acquired from the user. For example, to create a travel route, the user selects "Create route" on the menu screen D1 (see Fig. 4) displayed on the operation terminal 20. The operation control unit 21 acquires the route creation instruction when "Create route" is selected. Upon acquiring the route creation instruction (S3: Yes), the operation control unit 21 causes the process to proceed to step S4. The operation control unit 21 continues the determination processing until the route creation instruction is acquired (S3: No).

### <Step S4>

In step S4, the operation control unit 21 creates the travel route. Specifically, the operation control unit 21 creates the travel route based on conditions set by the user for the field and the work area selected by the user.

For example, the user selects a field for which to create a travel route on the field selection screen D2 (see Fig. 5A), selects a work area in which to actually perform work on the work area selection screen D3 (see Fig. 5B), selects a tractor on the tractor selection screen D4 (see Fig. 5C), selects a work machine 14 on the work machine selection screen D5 (see Fig. 5D), and selects manual travel or automatic travel, a work method (clockwise or counterclockwise) for the headland area F2, work order for the work area F1 and the headland area F2, and precedence of work acreage or precedence of finish on the headland work setting screen D6 (see Fig. 5E). The user selects a tractor use condition on the tractor use condition screen D7 (see Fig. 5F), selects a turning method for the headland area F2 on the turning method setting screen D8 (see Fig. 5G), and selects a headland setting method on the headland setting screen D9 (see Fig. 5H).

Upon receiving selection operations on the setting items from the user, the operation control unit 21 displays a list of the pieces of setting information on the setting confirmation screen D10 (see Fig. 5I). When the user confirms the pieces of setting information and presses the route creation button K1 on the setting confirmation screen D10 (see Fig. 5I), the operation control unit 21 creates a travel route for the work area of the field of interest, based on the pieces of setting information.

### <Step S5>

In step S5, the operation control unit 21 determines whether or not a route creation error has occurred. Specifically, if there is a location where the travel route cannot be created (error location) in at least one portion between the start position S and the end position G in the selected field and work area, the operation control unit 21 determines that a route creation error has occurred. On the other hand, if there is no error location between the start position S and the end position G, the operation control unit 21 determines that no route creation error has occurred (the travel route has been able to be appropriately created). If the operation control unit 21 determines that a route creation error has occurred (S5: Yes), the operation control unit 21 causes the process to proceed to step S6. On the other hand, if the operation control unit 21 determines that no route creation error has occurred (S5: No), the operation control unit 21 causes the process to proceed to step S9.

### <Step S6>

In step S6, the operation control unit 21 displays error information on the operation terminal 20. Specifically, the operation control unit 21 displays, on the route creation result screen D11, the reason why the travel route cannot be created, the error location, and a remedy (correction method) to correct the route creation error.

For example, as described in the first specific example, in the case where an appropriate travel route cannot be created because the headland width is small at the location A1 (error location) in a portion of the field F (see Fig. 6), the operation control unit 21 displays a message indicating that a route creation error has occurred and the reason why the route creation error has occurred (the fact that the headland width is too small) on the route creation result screen D11 shown in Fig. 7A. Further, on the route creation result screen D11, the operation control unit 21 displays a partial route from the start position S to the error location A1 on the map of the field F, and highlights a travel route (here, a work path and a turning path) corresponding to the error location A1. The operation control unit 21 displays a remedy to correct the route creation error (information prompting an operation of increasing the headland width). The operation control unit 21 sets the save button K2 to be grayed out or hidden to make the save button K2 unselectable (see Fig. 7A).

Thus, on the screen to display the created travel route (route creation result screen D11), the operation control unit 21 displays the travel route (partial route) and information on the route creation error (at least one of the message indicating that the route creation error has occurred, the reason, and the remedy) together. As another embodiment, the operation control unit 21 may display only the information on the route creation error on a screen different from the route creation result screen D11.

### <Step S7>

In step S7, the operation control unit 21 determines whether or not a remedial operation to correct the route creation error has been received from the user. Specifically, the user checks the remedy displayed on the route creation result screen D11 and performs the remedial operation. For example, in the first specific example, the user selects the error location A1 on the route creation result screen D11 and inputs a desired value in the headland width input field (see Fig. 7B). The operation control unit 21 may display a recommended value of an appropriate headland width in the input field in advance.

Upon receiving the remedial operation from the user (S7: Yes), the operation control unit 21 causes the process to proceed to step S4 and performs a travel route creation process. Specifically, the operation control unit 21 recreates the travel route based on the changed setting information. In the above example, the operation control unit 21 recreates the travel route based on the changed headland width. If no route creation error has occurred in the recreated travel route (the route creation error has been corrected) (S5: No), the operation control unit 21 causes the process to proceed to step S9. On the other hand, if a route creation error has still occurred in the recreated travel route (S5: Yes), the operation control unit 21 causes the process to proceed to step S6 to display error information again, and receives a remedial operation from the user again in step S7. The user repeats the remedial operation until the route creation error is corrected.

If the operation control unit 21 does not receive the remedial operation from the user (S7: No), the operation control unit 21 causes the process to proceed to step S8.

### <Step S8>

In step S8, the operation control unit 21 determines whether or not an end operation has been received from the user. The user performs a predetermined end operation to end the travel route creation process. If the operation control unit 21 receives the end operation from the user (S8: Yes), the operation control unit 21 ends the route creation process. On the other hand, if the operation control unit 21 does not receive the end operation from the user (S8: No), the operation control unit 21 causes the process to proceed to step S7. Thus, if a route creation error occurs, the user performs a remedial operation or an end operation.

### <Step S9>

In step S9, the operation control unit 21 displays the appropriately created travel route on the operation terminal 20. Specifically, the operation control unit 21 displays the appropriate travel route from the start position S to the end position G on the route creation result screen D11 (see Figs. 5J, 7C, etc.). The operation control unit 21 displays the save button K2 in a selectable manner on the route creation result screen D11.

### <Step S10>

In step S10, the operation control unit 21 determines whether or not a travel route save instruction has been received from the user. When the user selects the save button K2 (see Figs. 5J, 7C, etc.) on the route creation result screen D11, the operation control unit 21 receives the save instruction. Upon receiving the save instruction from the user (S10: Yes), the operation control unit 21 causes the process to proceed to step S11. The operation control unit 21 continues the determination processing until the operation control unit 21 receives the save instruction from the user (S10: No).

### <Step S11>

In step S11, the operation control unit 21 registers the data of the travel route, the name (registered name) of the travel route, and the field in association with each other. After step S11, the operation control unit 21 completes the route creation process.

Thus, the operation control unit 21 creates a travel route for a field and a work area selected by the user. The operation control unit 21 can set one or a plurality of work areas for each field, and can create one or a plurality of travel routes for each field. To start automatic travel, the user selects a field to be worked and a work area, and selects a desired travel route from one or a plurality of travel routes registered in association with the selected field and work area. The operation control unit 21 outputs route data of the selected travel route to the work vehicle 10. When the automatic travel start condition is satisfied, the work vehicle 10 starts automatic travel and automatic work according to the route data.

As described above, the automatic travel system 1 according to the present embodiment performs receiving, from a user, operations of inputting setting information necessary to create a travel route (target route) along which to cause the work vehicle 10 to automatically travel in a field, creating the travel route based on the setting information, and displaying a reason why the travel route cannot be created on a display screen (the route creation result screen D11) on which to display the travel route, when the travel route cannot be created in at least one portion between the start position S and the end position G set in the field.

According to the above configuration, when the travel route cannot be created in the at least one portion between the start position S and the end position G, the user can grasp the reason. Consequently, the user can perform an operation of changing the setting information corresponding to the reason (remedial operation) to remove the cause of the impossibility of creating the travel route, to recreate an appropriate travel route. Therefore, the work efficiency of work to create the travel route can be improved.

### [Other embodiments]

The present invention is not limited to the above-described embodiments, and may include the following embodiments.

For example, when a travel route cannot be created (when a route creation error is expected to occur), the operation control unit 21 may display error information and receive an operation of changing setting information on the setting confirmation screen D10 (see Fig. 5I). For example, in the case where a travel route cannot be created because the headland width is too small, the operation control unit 21 highlights (for example, displays in red) the current headland width and receives an operation of changing the headland width on the setting confirmation screen D10. For example, in the case where a travel route cannot be created because the turning method is straight travel only, the operation control unit 21 highlights (for example, displays in red) the current turning method ("Straight travel only") and receives an operation of changing the turning method on the setting confirmation screen D10. Thus, when a travel route cannot be created in at least one portion between the start position S and the end position G set in a field, the operation control unit 21 may identifiably display the setting information corresponding to the reason on a list screen listing the setting information (the setting confirmation screen D10).

The operation control unit 21 may display an operation portion corresponding to the reason (an example of a second operation portion of the present invention) on the setting confirmation screen D10, and may cause the setting confirmation screen D10 to transition to an input screen on which to receive an operation of inputting the setting information corresponding to the reason when the operation portion is selected by the user. For example, in the case where a travel route cannot be created because the headland width is too small, the operation control unit 21 displays an operation portion in association with the headland width displayed on the setting confirmation screen D10. When the user selects the operation portion, the operation control unit 21 displays the headland setting screen D9 (see Fig. 5H) to receive an operation of inputting the headland width.

The operation control unit 21 may highlight the "Edit" button corresponding to the reason on the setting confirmation screen D10 shown in Fig. 5I. For example, in the case where the route creation error has occurred due to the work area, the operation control unit 21 highlights the "Edit" button corresponding to "Work area". When the user presses the "Edit" button, the operation control unit 21 enables an operation of resetting the work area to be received.

When a travel route cannot be created, the operation control unit 21 may set the route creation button K1 to be grayed out or hidden to make the route creation button K1 unselectable. When it becomes possible to create a travel route, the operation control unit 21 may set the route creation button K1 to be selectable.

A route creation system of the present invention may include only the operation terminal 20, or may include the work vehicle 10 and the operation terminal 20, or may include only the work vehicle 10. Alternatively, the route creation system may include a server including the processing units included in the operation terminal 20.

### [Additional notes of the invention]

An outline of the invention extracted from the embodiments will be additionally described below. Note that configurations and processing functions described in the following additional notes can be selected and combined as desired.

### <Additional note 1>

A route creation method performed by one or a plurality of processors, the method including:
receiving, from a user, operations of inputting setting information necessary to create a travel route along which to cause a work vehicle to automatically travel in a work area;
creating the travel route based on the setting information; and
displaying a reason why the travel route cannot be created on a display screen on which to display the travel route, when the travel route cannot be created in at least one portion between a start position and an end position set in the work area.

### <Additional note 2>

The route creation method according to additional note 1, including identifiably displaying an error location where the travel route cannot be created on the display screen, when the travel route cannot be created in the at least one portion.

### <Additional note 3>

The route creation method according to additional note 2, including displaying a partial route from the start position to the error location on the display screen, when the travel route cannot be created in the at least one portion.

### <Additional note 4>

The route creation method according to any one of additional notes 1 to 3, including receiving an operation of re-inputting the setting information on the display screen, when the travel route cannot be created in the at least one portion.

### <Additional note 5>

The route creation method according to any one of additional notes 1 to 4, including:
displaying a first operation portion corresponding to the reason on the display screen; and
causing the display screen to transition to an input screen on which to receive an operation of inputting the setting information corresponding to the reason, when the first operation portion is selected by the user.

### <Additional note 6>

The route creation method according to any one of additional notes 1 to 5, including displaying a correction method of correcting the setting information corresponding to the reason, when the travel route cannot be created in the at least one portion.

### <Additional note 7>

The route creation method according to additional note 6, including displaying a field for inputting the setting information corresponding to the correction method on the display screen in association with an error location where the travel route cannot be created, when the travel route cannot be created in the at least one portion.

### <Additional note 8>

The route creation method according to any one of additional notes 1 to 7, including identifiably displaying the setting information corresponding to the reason on a list screen listing the setting information, when the travel route cannot be created in the at least one portion.

### <Additional note 9>

The route creation method according to additional note 8, including:
displaying a second operation portion corresponding to the reason on the list screen; and
causing the list screen to transition to an input screen on which to receive an operation of inputting the setting information corresponding to the reason, when the second operation portion is selected by the user.

### <Additional note 10>

A route creation program for causing one or a plurality of processors to perform:
receiving, from a user, operations of inputting setting information necessary to create a travel route along which to cause a work vehicle to automatically travel in a work area;
creating the travel route based on the setting information; and
displaying a reason why the travel route cannot be created on a display screen on which to display the travel route, when the travel route cannot be created in at least one portion between a start position and an end position set in the work area.

### <Additional note 11>

A route creation system including:
a reception processing unit that receives, from a user, operations of inputting setting information necessary to create a travel route along which to cause a work vehicle to automatically travel in a work area;
a creation processing unit that creates the travel route based on the setting information; and
a display processing unit that displays a reason why the travel route cannot be created on a display screen on which to display the travel route, when the travel route cannot be created in at least one portion between a start position and an end position set in the work area.

### LIST OF REFERENCE SIGNS

- 1: Automatic travel system
- 10: Work vehicle
- 11: Vehicle control device
- 14: Work machine
- 111: Travel processing unit
- 20: Operation terminal
- 21: Operation control unit
- 211: Display processing unit
- 212: Reception processing unit
- 213: Setting processing unit
- 214: Creation processing unit
- A1: Error location
- B1 to B15: Reset button (first operation portion)
- D1: Menu screen
- D2: Field selection screen
- D3: Work area selection screen
- D4: Tractor selection screen
- D5: Work machine selection screen
- D6: Headland work setting screen
- D7: Tractor use condition screen
- D8: Turning method setting screen
- D9: Headland setting screen
- D10: Setting confirmation screen
- D11: Route creation result screen
- D12: Headland setting screen
- K1: Route creation button
- K2: Save button
- K3: Headland width reset button
- K4: Reset button
- F: Field (work area)
- F1: Work area
- F2: Headland area
- R: Travel route
- S: Start position
- G: End position

## Claims

1. A route creation method comprising:
receiving, from a user, operations of inputting setting information necessary to create a travel route along which to cause a work vehicle to automatically travel in a work area;
creating the travel route based on the setting information; and
displaying a reason why the travel route cannot be created on a display screen on which to display the travel route, when the travel route cannot be created in at least one portion between a start position and an end position set in the work area.

2. The route creation method according to claim 1, comprising identifiably displaying an error location where the travel route cannot be created on the display screen, when the travel route cannot be created in the at least one portion.

3. The route creation method according to claim 2, comprising displaying a partial route from the start position to the error location on the display screen, when the travel route cannot be created in the at least one portion.

4. The route creation method according to claim 1, comprising receiving an operation of re-inputting the setting information on the display screen, when the travel route cannot be created in the at least one portion.

5. The route creation method according to claim 1, comprising:
displaying a first operation portion corresponding to the reason on the display screen; and
causing the display screen to transition to an input screen on which to receive an operation of inputting the setting information corresponding to the reason, when the first operation portion is selected by the user.

6. The route creation method according to any one of claims 1 to 5, comprising displaying a correction method of correcting the setting information corresponding to the reason, when the travel route cannot be created in the at least one portion.

7. The route creation method according to claim 6, comprising displaying a field for inputting the setting information corresponding to the correction method on the display screen in association with an error location where the travel route cannot be created, when the travel route cannot be created in the at least one portion.

8. The route creation method according to claim 1, comprising identifiably displaying the setting information corresponding to the reason on a list screen listing the setting information, when the travel route cannot be created in the at least one portion.

9. The route creation method according to claim 8, comprising:
displaying a second operation portion corresponding to the reason on the list screen; and
causing the list screen to transition to an input screen on which to receive an operation of inputting the setting information corresponding to the reason, when the second operation portion is selected by the user.

10. A route creation program for causing one or a plurality of processors to perform:
receiving, from a user, operations of inputting setting information necessary to create a travel route along which to cause a work vehicle to automatically travel in a work area;
creating the travel route based on the setting information; and
displaying a reason why the travel route cannot be created on a display screen on which to display the travel route, when the travel route cannot be created in at least one portion between a start position and an end position set in the work area.

11. A route creation system comprising:
a reception processing unit that receives, from a user, operations of inputting setting information necessary to create a travel route along which to cause a work vehicle to automatically travel in a work area;
a creation processing unit that creates the travel route based on the setting information; and
a display processing unit that displays a reason why the travel route cannot be created on a display screen on which to display the travel route, when the travel route cannot be created in at least one portion between a start position and an end position set in the work area.
